# DEMANDE DE BREVET EUROPEEN

(11) **EP 3 964 541 A1**
(43) Date de publication de la demande: **09.03.2022**
(21) Numéro de dépôt: 21194226.3
(22) Date de dépôt: 01.09.2021
(51) Int. Cl.: C08J 9/00, C08J 9/28, B01J 13/00, C08L 27/16, C08K 7/06, C08K 3/08

(54) **FABRICATION D'UN AEROGEL CONDUCTEUR**

(30) Priorité: 03.09.2020 FR 2008939
(71) Demandeur: Commissariat à l'Energie Atomique et aux Energies Alternatives, 75015 Paris (FR)
(72) Inventeur: CELLE, Caroline, 38054 GRENOBLE CEDEX 09 (FR); SIMONATO, Jean-Pierre, 38054 GRENOBLE CEDEX 09 (FR); TOURON, Maribel, 38054 GRENOBLE CEDEX 09 (FR)
(74) Mandataire: Nony

(57) **Abrégé**

La présente invention concerne un procédé de préparation d'un aérogel électriquement conducteur, comprenant au moins les étapes suivantes :
(i) disposer d'une formulation obtenue par mélange
- d'une solution d'au moins un polymère fluoré dans un ou plusieurs solvants non aqueux S1, ledit polymère fluoré étant choisi parmi les polyfluorures de vinylidène, les copolymères à base de fluorure de vinylidène et leurs mélanges ; et
- d'une dispersion de nanoobjets métalliques présentant un facteur de forme supérieur ou égal à 2, dans un ou plusieurs solvants alcooliques S2 ;

(ii) porter la formulation de l'étape (i) dans des conditions propices à sa gélification ;
(iii) dans le cas d'un séchage en étape (iv) par lyophilisation, procéder à un échange du milieu solvant de la formulation gélifiée par un ou plusieurs solvants aptes à être éliminés par lyophilisation ; et
(iv) éliminer le milieu solvant de la formulation gélifiée obtenue à l'issue de l'étape (ii) ou, le cas échéant, à l'issue de l'étape (iii), par lyophilisation ou par séchage supercritique, pour obtenir ledit aérogel.

## Description

### Domaine technique

La présente invention se rapporte à de nouveaux aérogels à base de polymères fluorés et de nanoobjets à facteur de forme élevé, en particulier de type nanofils métalliques, présentant d'excellentes propriétés combinées en termes de densité, de conductivité électrique et de propriétés mécaniques ; et à leur procédé de préparation.

### Technique antérieure

De nos jours, des besoins émergent concernant la fabrication de matériaux poreux conducteurs. Pour ce faire, différents systèmes poreux, intrinsèquement conducteurs, ont été élaborés, tels que des matériaux à base de polymères conducteurs, par exemple à base de poly(3,4-éthylènedioxythiophène) (PEDOT), de polymères chargés (par exemple, de type composite à base de polymères non conducteurs et de particules conductrices), ou encore des mousses ou aérogels métalliques. Toutefois, les polymères conducteurs présentent une conductivité limitée et leur utilisation est limitée dans le temps du fait de leur faible stabilité. Pour ce qui est des mousses métalliques, par exemple en nickel, aluminium, titane ou tantale, elles présentent des densités élevées, bien supérieures à la centaine de mg/cm³ ([1]). Quant aux mousses métalliques obtenues par recouvrement de mousses polymères par des métaux et pyrolyse à haute température, comme décrit dans les documents [2] et [3], elles présentent de faibles résistances mécaniques. Également, le procédé mis en œuvre pour leur préparation est coûteux en énergie et en solvants.

Des aérogels constitués uniquement de nanofils métalliques ont également été proposés, par exemple résultant d'un séchage par cryodessication [4] et par séchage supercritique [5], [6] et [7]. Malheureusement, la résistance mécanique de ces aérogels reste limitée.

D'autre part, les matériaux fluorés sont largement utilisés pour les applications liées au stockage d'énergie, par exemple dans les batteries ou dans les supercondensateurs (séparateurs, électrodes, électrolytes solides), en raison de leurs performances de transport ionique. A titre d'exemples, les documents US 5,830,923, US 2010/0288533, EP 2 430 085, EP 1 520 880 et EP 2 065 155 décrivent la préparation de mousses à base de polymères fluorés. Les matériaux poreux ainsi préparés ne sont pas électriquement conducteurs.

Les polymères fluorés ont ainsi été proposés pour former des revêtements électriquement isolants en surface d'un objet conducteur de type film ou câble métalliques (EP 2 964 461, EP 3 374 453).

Des matériaux combinant des polymères fluorés avec des charges électriquement conductrices ont par ailleurs été décrits.

Par exemple, le document WO 2013/101817 propose la préparation de matériaux conducteurs à base d'une résine fluorée et de charge carbonées (noir de carbone) ou d'oxyde de zinc, pour des applications antistatiques. Les matériaux fluorés sont faiblement conducteurs et non poreux. Il a également été décrit la préparation de films minces à deux dimensions (dans le plan), sans porosité, combinant des polyfluorures de vinylidène (PVDF) avec des nanotubes de carbone [8] ; ou avec des nanofils de cuivre ou d'argent ([9], [10]). On peut encore citer la publication de Yu *et al.* [11] qui décrit l'obtention par cryodessication d'un aérogel composite de polyfluorure de vinylidène (PVDF) et de nanotubes de carbone, présentant toutefois des résistivités électriques élevées (valeur minimale à 1,45.10⁴ Ω.cm) ; ou encore la publication de Sarno *et al.* [12] qui décrit l'obtention d'un film mince poreux composite de poly(fluorure de vinylidene-co-hexafluoropropylène) (PVDF-HFP) et d'oxyde de graphène, par séchage au CO₂ supercritique, sans précision sur les niveaux de conduction du matériau. Ces matériaux composites ne permettent pas d'atteindre les niveaux de conductivité électrique élevés souhaités.

Il a par ailleurs été proposé la préparation de matériaux poreux composites incorporant des nanofils métalliques. A titre d'exemple, Huang *et al.* [13] proposent la préparation d'un composite de poly(alcool vinylique) (PVA) (0,5 à 1 mg.mL⁻¹) et de nanofils de cuivre (CuNF) ultra-longs (350±150 µm de long et 45±10 nm de diamètre), qui est conducteur électrique lorsqu'il est soumis à une pression mécanique. On peut encore citer la publication de Yan *et al.* [14] qui propose l'obtention par cryodessiccation d'un composite de poly(alcool vinylique) (PVA) (0,01 mg.mL⁻¹) et de nanofils d'argent (125 nm et 25 µm) à 10 mg.mL⁻¹, présentant de bonnes conductivités (1,3 S/cm) liées à une concentration élevée en nanofils d'argent (ratio AgNF/PVA de 100). L'obtention d'objets de faibles densités (de 1,3 à 12,6 mg.cm⁻³) est possible grâce à l'utilisation de l'impression 3D permettant la fabrication de formes creuses spécifiques. Les densités ainsi calculées intègrent les vides du maillage macroscopique (forme imprimée) ; les aérogels obtenus à cette concentration en nanofils sont toutefois beaucoup plus denses (densité estimée à au moins un facteur 10, voire un facteur 15 sur la valeur supérieure donnée par les auteurs). De plus, les pressions exercées sur ces matériaux sont très basses (300 Pa maximum), et ne correspondent pas aux pressions exercées pour les applications visées pour les aérogels selon l'invention, par exemple en tant que capteurs de pression.

Ainsi, le PVA permet d'augmenter la tenue mécanique des aérogels de nanofils métalliques en jouant le rôle d'agent liant, mais limite la conduction électrique du matériau ainsi obtenu. Une bonne conduction est obtenue en-dessous d'une concentration en PVA de l'ordre de 0,01 mg.mL⁻¹, mais la tenue mécanique est acceptable à partir d'une concentration de 0,5 mg.mL⁻¹.

Il a encore été décrit des composites de polyuréthane et de nanofils d'argent [15], présentant de très hautes conductivités (10¹ S/m), mais pour des concentrations massiques en nanofils d'argent très élevées (27 % massique), car le polyuréthane isole les nanofils d'argent entre eux.

Ainsi, dans les trois cas précités, du fait de l'hydrosolubilité des poly(acétate de vinyle) et polyuréthane, la formulation d'aérogels à partir de ces polymères présente l'avantage d'être aisée. Les aérogels peuvent ainsi être obtenus par mélange d'une solution du polymère en milieu aqueux et d'une dispersion des nanofils en milieu aqueux, sans risquer d'agglomérer les nanofils et en conservant une bonne dispersion du polymère dans l'ensemble de la solution, avant de procéder au séchage, par exemple par cryodessication. Toutefois, la mise en œuvre de ces polymères ne permet pas de concilier de bonnes propriétés de tenue mécanique de l'aérogel et une conductivité électrique satisfaisante.

Par conséquent, il demeure un besoin d'accéder à un aérogel électriquement conducteur, combinant de bonnes propriétés de conduction électrique et de tenue mécanique, sans que l'une de ces propriétés soit obtenue au détriment de l'autre.

### Résumé de l'invention

Les inventeurs ont découvert qu'il est possible, en dépit de l'hydrophobicité des polymères fluorés n'autorisant pas leur mise en œuvre en solution aqueuse, de tirer profit de ces polymères, en les associant avec des nanoobjets métalliques à facteur de forme élevé, en particulier des nanofils métalliques, pour préparer des matériaux ultra-poreux présentant à la fois d'excellentes propriétés mécaniques, en particulier en termes de tenue mécanique, et des propriétés de conduction électrique élevée.

En particulier, il est du mérite des inventeurs d'avoir développé un nouveau procédé, s'affranchissant du problème d'incompatibilité des polymères fluorés hydrophobes avec les solvants aqueux, et permettant d'accéder à un aérogel présentant une structure homogène et des propriétés de tenue mécanique et de conduction électrique élevée.

La présente invention concerne ainsi, selon un premier de ses aspects, un procédé de préparation d'un aérogel électriquement conducteur, comprenant au moins les étapes suivantes :
(i) disposer d'une formulation obtenue par mélange
   - d'une solution d'au moins un polymère fluoré dans un ou plusieurs solvants non aqueux S1, ledit polymère fluoré étant choisi parmi les polyfluorures de vinylidène, les copolymères à base de fluorure de vinylidène et leurs mélanges ; et
   - d'une dispersion de nanoobjets métalliques présentant un facteur de forme supérieur ou égal à 2, en particulier étant des nanofils métalliques, dans un ou plusieurs solvants alcooliques S2 ;
(ii) porter la formulation de l'étape (i) dans des conditions propices à sa gélification ;
(iii) dans le cas d'un séchage en étape (iv) par lyophilisation, procéder à un échange du milieu solvant de la formulation gélifiée par un ou plusieurs solvants aptes à être éliminés par lyophilisation ; et
(iv) éliminer le milieu solvant de la formulation gélifiée obtenue à l'issue de l'étape (ii) ou, le cas échéant, à l'issue de l'étape (iii), par lyophilisation ou par séchage supercritique, en particulier par séchage au CO₂ supercritique, pour obtenir ledit aérogel.

L'invention concerne encore, selon un autre de ses aspects, un aérogel composite électriquement conducteur, en particulier tel qu'obtenu à l'issue du procédé de l'invention, comprenant des nanoobjets métalliques présentant un facteur de forme supérieur ou égal à 2, en particulier des nanofils métalliques, dans une matrice polymérique à base d'un ou plusieurs polymère(s) fluoré(s) choisi(s) parmi les polyfluorures de vinylidène, les copolymères à base de fluorure de vinylidène et leurs mélanges.

En particulier, les nanoobjets métalliques considérés selon l'invention présentent un facteur de forme strictement supérieur à 2, en particulier supérieur ou égal à 10, notamment supérieur ou égal à 50 et plus particulièrement compris entre 100 et 40 000.

Selon un mode de réalisation particulier, il s'agit de nanofils métalliques, en particulier présentant une longueur moyenne comprise entre 1 µm et 1000 µm, notamment entre 2 µm et 500 µm, et un diamètre moyen compris entre 20 nm et 500 nm, en particulier entre 30 nm et 100 nm.

On désigne plus simplement dans la suite du texte sous l'expression « polymères de type PVDF » ou « polymères fluorés », les homopolymères polyfluorure de vinylidène (PVDF) et copolymères à base de fluorure de vinylidène.

Par « aérogel », on entend désigner un matériau ultraporeux, autrement dit un matériau solide présentant une porosité supérieure ou égale à 95 %, en particulier supérieure ou égale à 98 %, autrement dit composé à plus de 95 %, notamment plus de 98 % de gaz, en particulier d'air.

On peut également désigner ce matériau ultra-poreux sous les termes « mousse », « éponge », « mousse composite » ou « éponge composite ».

Le procédé de l'invention permet d'accéder à des aérogels présentant d'excellentes propriétés combinées en termes de densité, de conductivité électrique élevée et de propriétés mécaniques.

Avantageusement, l'association d'un ou plusieurs polymères fluorés selon l'invention avec des nanoobjets métalliques à haut facteur de forme, par exemple des nanofils métalliques, permet d'accéder à des conductivités élevées pour l'aérogel formé, même pour de faibles taux de charge en nanoobjets métalliques.

Ainsi, l'aérogel formé selon l'invention peut présenter un rapport massique nanoobjets métalliques, en particulier nanofils métalliques/polymère(s) fluoré(s) compris entre 0,1 et 100, en particulier entre 0,3 et 5,0 et plus particulièrement entre 0,3 et 2.

Les aérogels formés selon l'invention présentent ainsi avantageusement, sur l'ensemble de leur volume, une densité inférieure ou égale à 500 mg/cm³, en particulier inférieure ou égale à 200 mg/cm³, notamment comprise entre 10 et 100 mg/cm³ et plus particulièrement comprise entre 20 et 70 mg/cm³.

L'aérogel selon l'invention présente une excellente conduction électrique, sur l'ensemble de son volume. Les propriétés de conduction électrique peuvent être appréciées par mesure de la résistance, et plus particulièrement par mesure de la résistance linéaire, mesurée par la méthode deux pointes, notée R_{2P}^{1cm}, comme détaillé dans la suite du texte.

De manière avantageuse, comme illustré dans les exemples qui suivent, un aérogel préparé selon l'invention associe à la fois d'excellentes propriétés en termes de conduction électrique élevée et de propriétés mécaniques, notamment de tenue mécanique et de flexibilité. En particulier, un aérogel selon l'invention peut être un matériau autosupporté. Il peut se présenter sous la forme d'un article moulé en aérogel, présentant la forme et les dimensions souhaitées pour son application.

Avantageusement, un aérogel formé selon l'invention présente une bonne homogénéité, autrement dit une répartition homogène des pores dans le matériau et une bonne isotropie en termes de propriétés de conduction électrique et de densité sur l'ensemble de son volume. Ces propriétés combinées font de ces aérogels des matériaux de choix pour leur intégration en dispositifs fonctionnels et déformables. Les aérogels selon l'invention présentent par ailleurs de bonnes performances de transport ionique, du fait de la mise en œuvre de polymère(s) fluoré(s).

Les aérogels préparés selon l'invention peuvent être par exemple utilisés en tant que matériaux conducteurs électriques présentant de très grandes surfaces spécifiques utilisables, notamment en tant qu'électrodes, pour des batteries ou supercondensateurs, mais aussi en tant que capteurs de pression et de matériaux actifs à fortes permittivités pour des capteurs piézorésistifs ou piézoélectriques.

L'invention concerne ainsi, selon un autre de ses aspects, l'utilisation d'un aérogel selon l'invention, en particulier tel qu'obtenu selon le procédé de l'invention, en tant qu'électrode, pour une batterie ou un supercondensateur, en tant que capteur de pression ou de matériau actif pour un capteur piézorésistif.

Enfin, le séchage mis en œuvre selon le procédé de l'invention pour obtenir les aérogels, dans un fluide supercritique, par exemple au CO₂ supercritique ou par cryodessication (lyophilisation) est peu coûteux en énergie et en solvants. Les solvants mis en œuvre au cours du procédé de fabrication d'un aérogel selon l'invention peuvent être avantageusement récupérés et recyclés.

D'autres caractéristiques, variantes et avantages du procédé selon l'invention, et des aérogels électriquement conducteurs obtenus selon l'invention, ressortiront mieux à la lecture de la description et des exemples qui suivent, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] présente, de manière schématique, en vue de coupe, un aérogel électriquement conducteur formé selon l'invention à base de polymère(s) fluoré(s) chargé(s) en nanoobjets métalliques tels que des nanofils d'argent ;
[Fig 2] présente les photographies de l'aérogel de nanofils d'argent préparé selon l'exemple 1, non conforme à l'invention, au cours de l'essai de compression manuelle ;
[Fig 3] présente une photographie de l'aérogel, en coupe, obtenu selon le mode opératoire décrit en exemple 2, non conforme à l'invention ;
[Fig 4] présente les photographies de l'aérogel à base de P(VDF-HFP) et de nanofils d'argent préparé selon l'exemple 3, conforme à l'invention, au cours de l'essai de compression manuelle ;
[Fig 5] est un cliché obtenu par microscopie électronique à balayage d'un aérogel à base de P(VDF-HFP) et de nanofils d'argent, préparé selon l'exemple 5 à partir d'une formulation de AgNF :P(VDF-HFP) :acétone :EtOH de ratios massiques 2 :5 :58 :35, obtenu selon l'invention, par séchage par lyophilisation.

### Description détaillée

### PREPARATION DE L'AEROGEL

Etape (i) : Mélange d'une dispersion de nanoobjets métalliques et d'une solution de polymère(s) fluoré(s)

Comme indiqué précédemment, les aérogels électriquement conducteurs selon l'invention sont préparés à partir d'une formulation obtenue par mélange :
- d'une solution d'au moins un polymère fluoré, en particulier de type PVDF, dans un ou plusieurs solvants non aqueux S1 ; et
- d'une dispersion de nanoobjets métalliques présentant un facteur de forme supérieur ou égal à 2, en particulier de nanofils métalliques, dans un ou plusieurs solvants alcooliques S2.

### Solution de polymère(s) fluoré(s)

Les polymères fluorés mis en œuvre selon l'invention sont choisis parmi les polyfluorures de vinylidène (PVDF), les copolymères à base de fluorure de vinylidène (autrement dit, les copolymères de fluororure de vinylidène et d'un ou plusieurs comonomères) ; et leurs mélanges.

En particulier, les copolymères à base de fluorure de vinylidène peuvent être choisis parmi les copolymères de fluorure de vinylidène (VDF) et d'un ou plusieurs comonomères fluorés choisis parmi l'hexafluoropropylène (HFP), le chlorotrifluoroéthylène (CTFE), le tétrafluoroéthylène (TFE), le trifluoroéthylène (TrFE), le chlorofluroéthylène (CFE), le perfluorobutyléthylène (PFBE), le fluoroéthylènepropylène (FEP) le 1,2-difluoroéthylène, le tétrafluoroéthylène (TFE), le 3,3,3-trifluoropropène, le 2-trifluorométhyl- 3,3,3-trifluoro-1-propène, le 2,3,3,3-tetrafluoropropène ou HFO-1234yf, le E-1,3,3,3-tetrafluoropropène ou HFO-1234zeE, le Z-1,3,3,3-tetrafluoropropène ou HFO-1234zeZ, le 1,1,2,3-tetrafluoropropène ou HFO-1234yc, le 1,2,3,3- tetrafluoropropène ou HFO-1234ye, le 1,1,3,3-tetrafluoropropène ou HFO- 1234zc et le chlorotétrafluoropropène ou HCFO-1224 et les combinaisons de ceux-ci.

Les copolymères peuvent être des copolymères blocs ou statistiques.

De préférence, un seul comonomère est présent dans le copolymère.

Selon un mode de réalisation particulier, les polymères fluorés mis en œuvre selon l'invention peuvent être plus particulièrement choisis parmi les homopolymères PVDF, les copolymères poly(fluorure de vinylidene-co-trifluoroéthylène) P(VDF-TrFE), poly(fluorure de vinylidene-co-hexafluoropropylène) P(VDF-HFP), poly(fluorure de vinylidene-co-fluoroéthylènepropylène) P(VDF-FEP) et leurs mélanges.

Selon un mode de réalisation particulier, le polymère fluoré mis en œuvre selon l'invention est un copolymère P(VDF-HFP).

Selon un mode de réalisation particulier, le ou lesdits polymère fluorés mis en œuvre selon l'invention, en particulier de type PVDF, peuvent présenter une masse moléculaire comprise entre 200 g/mol et 600 kg/mol, en particulier entre 100 et 500 kg/mol.

Une solution d'un ou plusieurs polymères fluorés, en particulier tels que décrits précédemment, peut être préalablement préparée par dissolution du ou desdits polymères fluorés dans un ou plusieurs solvants non aqueux, noté S1.

L'homme du métier est à même d'adapter la nature du ou desdits solvants S1 de manière à obtenir une bonne solubilisation du ou desdits polymères fluorés dans le milieu solvant. Ces solvants sont qualifiés selon l'invention de « bon solvant ». On entend plus particulièrement par « bon solvant », un solvant dans lequel la solubilité du polymère fluoré est au moins égale à 400 g/kg de solvant à 23°C.

En particulier, le ou lesdits solvants du milieu solvant S1 sont choisis parmi les solvants aprotiques, en particulier choisi parmi l'acétone, la diméthylformamide (DMF) et le diméthyl sulfoxyde (DMSO), et leurs mélanges.

De préférence, la solution comprend le ou lesdits polymères fluorés dans l'acétone ou le DMSO, de préférence l'acétone.

Le ou lesdits polymères fluorés, en particulier à base de fluorure de vinylidène tels que décrits précédemment, peuvent être mis en œuvre à raison de 0,2 à 40 % massique, en particulier entre 1 et 20 % massique et plus particulièrement entre 2 et 5 % massique par rapport à la masse totale de ladite solution.

### Dispersion de nanoobjets métalliques à facteur de forme élevé

Comme indiqué précédemment, les nanoobjets métalliques mis en œuvre selon l'invention présentent un facteur de forme élevé. Le facteur de forme correspond au rapport entre la plus grande dimension du nanoobjet, typiquement la longueur du nanofil et la plus petite dimension, telle que l'épaisseur d'un nanofil de type lamellaire ou le diamètre d'un nanofil de type cylindrique.

Les dimensions des nanoobjets métalliques peuvent être évaluées par microscopie électronique en transmission (TEM) ou par microscopie électronique à balayage (MEB). La dimension (diamètre, longueur) s'entend de la dimension moyenne (diamètre moyen, longueur moyenne) en nombre de l'ensemble des nanoobjets métalliques d'une population donnée.

Les nanoobjets métalliques présentent plus particulièrement un facteur de forme strictement supérieur à 2, en particulier supérieur ou égal à 10, notamment supérieur ou égal à 50 et plus particulièrement compris entre 100 et 40 000.

Selon un mode de réalisation particulier, les nanoobjets métalliques à facteur de forme élevé sont des nanofils métalliques. Les nanofils métalliques peuvent être notamment de type lamellaire ou cylindrique, en particulier de type cylindrique.

Le ou les nano-fil(s) métallique(s) de l'invention ont typiquement au moins une de leurs dimensions de taille nanométrique (10⁻⁹ mètre), en particulier une de leurs dimensions inférieure ou égale à 100 nm.

De préférence, le ou les nano-fil(s) métallique(s) de l'invention peu(ven)t avoir au moins un de leurs dimensions allant de 20 à 800 nm.

En particulier, les nanofils métalliques peuvent présenter un diamètre moyen compris entre 20 nm et 500 nm, notamment entre 30 nm et 100 nm.

La longueur moyenne des nanofils peut être plus particulièrement comprise entre 1 µm et 1000 µm, en particulier entre 2 µm et 500 µm.

Il peut s'agir par exemple de nanofils de diamètre moyen de 60 nm et de longueur moyenne de 10 µm.

Les nanoobjets métalliques, en particulier les nanofils métalliques, sont formés d'un matériau métallique, qui peut être choisi parmi les métaux élémentaires (Cu, AG, Au, Ni, Pd, Pt). Le matériau métallique peut également être un matériau bimétallique ou un alliage métallique qui comprend au moins deux types de métaux, par exemple le cupronickel (alliage de cuivre et de nickel).

De préférence, les nanoobjets métalliques, en particulier les nanofils, sont formés d'un ou plusieurs métaux. A titre d'exemple, on peut notamment citer l'argent, l'or, le cuivre, le nickel, les systèmes cœur-coquille ayant un cœur en cuivre, argent, nickel, platine ou palladium.

Selon un mode de réalisation particulier, les nanofils métalliques de l'invention sont des nanofils à base d'argent, d'or, de cuivre, de nickel, de palladium et/ou de platine, c'est-à-dire que leur composition massique comprend au moins 50 % en masse de l'un ou plusieurs de ces métaux. En particulier, les nanofils métalliques peuvent être des nanofils d'argent, d'or, de cuivre et/ou de nickel.

Selon un mode de réalisation particulier, les nanoobjets métalliques selon l'invention sont des nanofils d'argent.

Les nanofils peuvent être préalablement préparés selon des méthodes de synthèse classiques, connues de l'homme du métier ou décrites dans la littérature.

Les protocoles de synthèse des nanofils métalliques sont bien connus de l'homme du métier. D'une manière générale, ils mettent en œuvre la réduction de sels métalliques, par exemple du nitrate d'argent pour la synthèse de nanofils d'argent, par un polyol, typiquement l'éthylène glycol, en présence d'un agent de nucléation (généralement NaCl) et de polyvinylpyrrolidone (PVP). La PVP joue le rôle d'agent de blocage, capable de contrôler les vitesses de croissance des différentes surfaces de nanocristaux d'argent.

A titre d'exemple, les nanofils métalliques peuvent être synthétisés comme décrit dans la publication Toybou et al., Environ. Sci. : Nano, 2019, 6, 684 [16].

La dispersion des nanoobjets métalliques, en particulier de type nanofils, peut être préalablement préparée par dispersion des nanoobjets métalliques dans un ou plusieurs solvants alcooliques.

Ainsi, le ou lesdits solvants de la dispersion des nanoobjets métalliques sont distincts de l'eau.

Le ou les solvants alcooliques peuvent être plus particulièrement choisis parmi les alcools en C₁ à C₅, tels que l'éthanol, le méthanol, l'isopropanol et le tert-butanol.

Selon un mode de réalisation particulier, le solvant alcoolique est l'isopropanol, le méthanol ou l'éthanol, en particulier l'éthanol.

Les solvants alcooliques mis en œuvre pour la dispersion des nanoobjets métalliques sont des mauvais solvants des polymères fluorés. Par « mauvais solvant » ou « non-solvant » du polymère fluoré, on entend un solvant dans lequel la solubilité du polymère fluoré est inférieure à 100 g/L à 20°C.

Les nanoobjets métalliques, en particulier de type nanofils métalliques, peuvent être présents à raison de 0,2 à 20 % massique, en particulier de 1 à 10 % massique, dans la dispersion.

La formulation en étape (i) du procédé de l'invention résulte du mélange de ladite solution de polymère(s) fluoré(s), en particulier de type PVDF, et de la dispersion des nanoobjets métalliques, en particulier de type nanofils métalliques.

Selon un mode de réalisation particulier, la dispersion des nanoobjets métalliques est ajoutée lentement à la solution de polymère(s) fluoré(s), en particulier au goutte à goutte. En particulier, la solution de polymère(s) fluoré(s) est maintenue sous agitation pendant l'ajout de la dispersion des nanoobjets métalliques.

Le milieu solvant de la formulation comprend ainsi le ou lesdits solvants non-aqueux S1 de la solution de polymère(s) fluoré(s) et le ou lesdits solvants alcooliques S2 de la dispersion des objets métalliques.

De préférence, la formulation en étape (i) présente une bonne homogénéité, en particulier une bonne dispersion des différents ingrédients de la formulation. Avantageusement, la formulation en étape (i) est mise sous agitation afin d'obtenir une dispersion homogène.

La formulation en étape (i) se présente avantageusement sous la forme d'une dispersion homogène entre le ou lesdits solvants S1, « bon(s) solvant(s) » du ou desdits polymères fluorés, le ou lesdits solvants alcooliques S2 « mauvais solvant(s) » (ou « non-solvant(s) ») du ou desdits polymères fluorés, le ou lesdits polymères fluorés, en particulier de type PVDF et les nanoobjets métalliques, en particulier de type nanofils métalliques.

Selon un mode de réalisation particulier, le milieu solvant de la formulation en étape (i) du procédé de l'invention comprend, voire est formé, d'un ou plusieurs solvants S1 choisis parmi l'acétone, la diméthylformamide (DMF) et le diméthyl sulfoxyde (DMSO) et d'un ou plusieurs solvants S2 choisis parmi les alcools en en Ci à Cs, tels que l'éthanol, le méthanol, le tert-butanol et l'isopropanol.

L'homme du métier est à même d'ajuster les teneurs et ratio massique en polymère(s) fluoré(s) et en nanoobjets métalliques, en particulier de type nanofils métalliques, au regard des propriétés souhaitées pour l'aérogel, en particulier au regard de la densité souhaitée pour l'aérogel et de ses propriétés mécaniques et de conductivité électrique.

La formulation non aqueuse mise en œuvre en étape (i) du procédé de l'invention, résultant du mélange de la solution du ou desdits polymères fluorés et de la dispersion des nanoobjets métalliques, peut comprendre une concentration (ou taux de charge) massique en nanoobjets métalliques, en particulier de type nanofils métalliques, comprise entre 0,01 et 10 % massique, en particulier entre 0,5 et 5 % massique, par rapport à la masse totale de ladite formulation.

La concentration massique en polymère(s) fluoré(s), en particulier de type PVDF, de ladite formulation peut être comprise entre 0,2 et 40 % massique, en particulier entre 1 % et 20 % massique, en particulier entre 2 et 5 % massique.

Selon un mode de réalisation particulier, la formulation mise en œuvre en étape (i) présente un rapport massique nanoobjets métalliques, en particulier nanofils métalliques/polymère(s) fluoré(s) compris entre 0,1 et 100, en particulier entre 0,3 et 5,0 et plus particulièrement entre 0,3 et 2.

### Etape (ii) : Gélification de la formulation

Dans une seconde étape du procédé de l'invention, la formulation est portée dans des conditions propices à sa gélification.

Plus particulièrement, la gélification de la formulation peut être opérée par abaissement de la température de la formulation, plus précisément en-dessous d'une température limite dite température de gélification.

La formulation peut être avantageusement gélifiée dans un récipient, « moule », ayant la forme et les dimensions souhaitées pour l'aérogel final.

Le moule, par exemple en Téflon^{®}, peut être de forme et taille variées, au regard de la forme et des dimensions souhaitées pour l'objet formé dudit aérogel.

L'aérogel autosupporté obtenu à l'issue du procédé de l'invention peut ainsi prendre la forme d'un article moulé.

Il appartient à l'homme du métier d'ajuster les conditions, en particulier en termes de température, pour permettre la gélification de la formulation.

La température dite de gélification, T_{gel}, de la formulation dépend de la composition de la formulation, en particulier des proportions en solvants S1 et S2 mis en œuvre dans la formulation, des concentrations en nanoobjets métalliques et polymère(s) fluoré(s). La température de gélification, T_{gel}, peut être comprise entre 20 et -30 °C, en particulier entre 5 et -20 °C.

La température dite de gélification est caractérisée comme la température à laquelle se produit une démixtion de phases solide/liquide. Le ou les polymères fluorés ne sont plus que partiellement solubles dans le milieu solvant S1/S2 (solvant/non-solvant), et cristallise partiellement formant une phase solide. Cette structure partiellement cristallisée, en plus d'agir comme un agent liant entre les nanofils, apporte une bonne tenue mécanique au matériau.

La température et le temps de gélification d'une formulation donnée peut être déterminée par de mesures de rhéologie. Il s'agit de la température et du temps à partir desquels le facteur de perte tanδ définit comme le rapport G"/G' (rapport de la partie imaginaire G" (module de perte -comportement visqueux) et réelle G' (module de conservation - comportement élastique) du module complexe) devient indépendant de la fréquence (pour des fréquences comprises entre 0,1 et 0,01 rad/s). La température de gélification, tout comme le temps de gélification, peut encore être déterminée simplement expérimentalement en retournant le récipient contenant la formulation. Si la formulation s'écoule, alors la gélification n'a pas encore eue lieu.

Selon un mode de réalisation particulier, la gélification de la formulation est opérée à une température inférieure ou égale à -5 °C, en particulier inférieure ou égale à -20°C, et plus particulièrement comprise entre -15 et-22 °C.

Il est entendu que la température à laquelle est opérée la gélification de la formulation en étape (ii) ne permet pas une solidification du système, en particulier est supérieure à la température de congélation (point du fusion) du milieu solvant.

Le refroidissement de la formulation à une température inférieure à T_{gel} peut être opéré en plaçant le récipient (moule) comprenant ladite formulation dans une unité froide à la température souhaitée.

La formulation gélifiée (ou « gel ») obtenue à l'issue de l'étape (ii) est avantageusement autosupporté. Autrement dit, le gel formé peut être retiré, en conservant sa forme, du récipient (ou moule), dans lequel la formulation liquide de l'étape (i) a été versée en vue de sa gélification.

Etape (iii) : échange du milieu solvant

A des fins de permettre l'élimination du milieu solvant pour la formation d'un aérogel en étape (iv) du procédé de l'invention, il peut être procédé à une étape, préalablement à l'étape (v), d'échange du milieu solvant de la formulation gélifiée obtenue en étape (ii) par un ou plusieurs solvants, dits dans la suite du texte « solvants d'échange », adéquats, aptes à être éliminés par lyophilisation (cryodessication) ou par séchage supercritique, en particulier au CO₂ supercritique.

Selon une première variante du procédé de l'invention, dans le cas où le milieu solvant de la formulation gélifiée à l'issue de l'étape (ii) est compatible avec son élimination selon la méthode mise en œuvre en étape (iv) du procédé de l'invention (lyophilisation ou séchage supercritique), cette étape (iii) est optionnelle. En particulier, il peut être procédé à l'étape (iv) d'élimination du milieu solvant de la formulation gélifiée obtenue à l'issue de l'étape (ii), sans procéder à une étape (iii) d'échange de solvants.

En revanche, selon une autre variante du procédé de l'invention, dans le cas où le milieu solvant de la formulation gélifiée à l'issue de l'étape (ii) n'est pas compatible avec son élimination selon la méthode mise en œuvre en étape (iv) du procédé de l'invention (lyophilisation ou séchage supercritique), il est procédé à une étape (iii) d'échange des solvants, préalablement à l'étape (iv), en particulier par un ou plusieurs solvants choisis parmi l'eau, les alcools et leurs mélanges.

Plus particulièrement, pour permettre une élimination aisée des solvants par lyophilisation (encore connue sous l'appellation « cryodessication »), il est préférable que le ou lesdits solvants présentent un point triple (point du diagramme de phase température-pression (P, T) où peuvent coexister les trois phases liquide, solide et gaz) proche de celui de l'eau pure (0,006 atm, 0,01°C), par exemple P compris entre 0,006 atm et 0,004 atm et T compris entre 0,01°C et -0,5°C.

Des solvants compatibles avec la lyophilisation peuvent être par exemple choisis parmi l'eau, les alcools, en particulier en C₃-C₅, et plus particulièrement en C₄-C₅, tel que le tert-butanol, et leurs mélanges.

Selon un mode de réalisation particulier, le solvant d'échange est l'eau.

Selon un autre mode de réalisation, dans le cas où l'étape (iv) d'élimination du milieu solvant est opéré par séchage supercritique, en particulier au CO₂ supercritique, le ou lesdits solvants doivent être miscibles avec le fluide supercritique, en particulier le CO₂ supercritique, dans les conditions de pression et de température supercritique.

Le ou les solvants non aqueux S1 mis en œuvre en étape (i) pour la solubilisation du ou desdits polymères fluorés de type PVDF, en particulier tels que décrits précédemment, notamment l'acétone, DMF et DMSO, ainsi que le ou lesdits solvants alcooliques S2 mis en œuvre pour la dispersion de nanoobjets métalliques, en particulier de nanofils métalliques, sont compatibles avec le séchage supercritique, en particulier au CO₂ supercritique.

Ainsi, dans le cas où l'étape (iv) d'élimination du milieu solvant est opéré par séchage supercritique, l'étape (iii) d'échange des solvants peut être avantageusement optionnelle.

L'échange des solvants en étape (iii), lorsqu'elle est présente, peut être opéré en immergeant la formulation gélifiée dans le ou lesdits solvants. Il est avantageusement opéré à plusieurs immersions successives du gel dans le ou lesdits solvants d'échange, jusqu'à ce que la majeure partie, voire la totalité, du solvant ou desdits solvants contenus dans le gel soit composée du ou desdits solvants d'échange. Il appartient à l'homme du métier d'ajuster la durée d'immersion du gel dans le ou lesdits solvants pour obtenir l'échange du milieu solvant.

En particulier, à l'issue de l'étape (iii), au moins 80%, voire au moins 90 %, du volume du milieu solvant contenu dans le gel sont formés par le ou lesdits solvants d'échange. L'étape (iii) d'échange de solvants peut être opérée à température ambiante. Par « température ambiante », on entend une température de 20°C ± 5°C.

### Etape (iv) : séchage

Dans une étape (iv), le milieu solvant de la formulation gélifiée obtenue à l'issue de l'étape (ii) (dans le cas où l'étape (iii) n'est pas opérée) ou à l'issue de l'étape (iii) d'échange des solvants, est éliminé.

Le milieu solvant éliminé en étape (iv) peut ainsi comprendre, voire être formé des solvants S1 et S2 de la formulation de départ, dans le cas où ce milieu solvant est compatible avec la méthode de séchage mise en œuvre en étape (iv).

Alternativement, il peut comprendre, voire être formé, du ou des solvants d'échange mis en œuvre en étape (iii).

Comme évoqué précédemment, le gel peut être séché par lyophilisation (ou cryodessication) ou par séchage supercritique, en particulier au CO₂ supercritique.

L'élimination du milieu solvant est opérée dans des conditions permettant de conserver la structure et la cohésion du gel obtenu à l'issue de l'étape (ii).

En particulier, les conditions du séchage en étape (iv) sont ajustées pour permettre une élimination du milieu solvant hors du réseau formé par la matrice en polymère(s) fluoré(s) chargée en nanoobjets métalliques, sans exercer de contraintes capillaires importantes qui pourraient provoquer l'effondrement total ou partiel de la structure du réseau tridimensionnel.

Selon une première variante de réalisation, l'élimination du milieu solvant en étape (iv) peut être opérée par lyophilisation, encore appelée « cryodessiccation ».

Plus particulièrement, selon cette variante, l'élimination du milieu solvant pour former l'aérogel met en œuvre les étapes successives suivantes :
- solidification (congélation) du milieu solvant de la formulation gélifiée par abaissement de la température de ladite dispersion en-dessous du point de fusion dudit milieu solvant, c'est-à-dire en-dessous du point de fusion du ou desdits solvants et, le cas échéant, du ou desdits composés additionnels ; et
- sublimation sous vide dudit milieu solvant solidifié pour former un aérogel.

Il est entendu que les conditions opératoires, pour la congélation et la sublimation du milieu solvant pour l'obtention d'un aérogel selon l'invention, sont ajustées au regard de la nature du milieu solvant de la formulation gélifiée.

La congélation du milieu solvant peut être typiquement opérée en portant la dispersion à une température inférieure ou égale à -10 °C, en particulier inférieure ou égale à - 20 °C, notamment inférieure ou égale à - 30 °Cet plus particulièrement inférieure ou égale à - 50°C. De préférence, la congélation du milieu solvant est opérée par refroidissement lent. Alternativement, il peut être opéré par un refroidissement brutal (trempe).

Ce refroidissement peut être par exemple réalisé par immersion du gel dans de l'azote liquide. Il peut encore être opéré à l'aide d'un bain de carboglace dans l'acétone ou encore par contact avec une surface froide de type plateaux refroidis, par exemple plateaux métalliques.

L'élimination du milieu solvant solidifié est ensuite opérée par sublimation du milieu solvant. Les conditions de température et de pression sont ajustées pour permettre la sublimation du milieu solvant. En particulier, cette élimination est plus particulièrement opérée sous vide, notamment dans des conditions de pression inférieure ou égale à 10000 Pa, en particulier inférieure ou égale à 1000 Pa et plus particulièrement inférieure ou égale à 100 Pa.

Elle peut être opérée à une température comprise entre -100 et 0 °C, en particulier entre -50 et -20 °C.

La durée est ajustée de manière à éliminer plus de 95 % du milieu solvant, en particulier plus de 99 % du milieu solvant.

L'homme du métier est à même de mettre en œuvre un dispositif adéquat, par exemple un lyophilisateur adapté, pour l'élimination du milieu solvant.

Selon une autre variante de réalisation, l'élimination du milieu solvant en étape (iv) peut être opérée par séchage supercritique, en particulier au dioxyde de carbone supercritique.

Il appartient à l'homme du métier d'ajuster les conditions pour opérer le séchage dans le CO₂ supercritique. L'élimination du milieu solvant par séchage supercritique peut être réalisé dans un autoclave.

D'une manière générale, le séchage à l'aide d'un fluide supercritique, en particulier au CO₂ supercritique peut être opéré *via* les étapes suivantes :
- extraction du ou des solvants, miscibles avec le fluide supercritique, en particulier avec le CO₂ dans les conditions de pression et de température supercritique, en particulier par balayage du CO₂ supercritique à travers l'échantillon ;
- évacuation du dioxyde de carbone afin d'obtenir un aérogel.

Plus particulièrement, à la fin de la phase d'extraction, les conditions de pression et de température sont modifiées pour repasser le CO₂ à l'état gazeux et ainsi récupérer la structure poreuse sèche.

### AEROGEL CONDUCTEUR ELECTRONIQUE

Le matériau sec obtenu à l'issue du séchage en étape (iv) est un aérogel.

Il se présente plus particulièrement sous la forme d'un réseau (ou matrice) tridimensionnel formé par le ou lesdits polymères fluorés, en particulier de type PVDF, chargé avec les nanoobjets métalliques à fort facteur de forme, en particulier en nanofils métalliques.

Un aérogel selon l'invention comprend ainsi, en particulier est formé, du ou desdits polymère(s) fluoré(s), des nanoobjets métalliques à fort facteur de forme, en particulier de type nanofils métalliques, et d'un ou plusieurs gaz, en particulier de l'air.

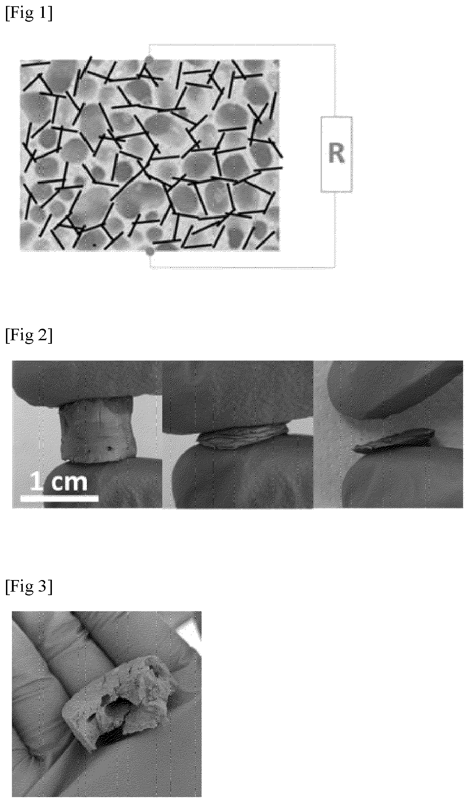

La figure 1 représente de manière schématique un matériau poreux conducteur conforme à l'invention chargé avec des nanoobjets à facteur de forme élevé, de type nanofils métalliques.

De manière avantageuse, l' aérogel selon l'invention présente, sur l'ensemble de son volume, une faible densité, en particulier une densité inférieure ou égale à 500 mg/cm³, en particulier inférieure ou égale à 200 mg/cm³, notamment comprise entre 10 et 100 mg/cm³ et plus particulièrement comprise entre 20 et 70 mg/cm³. La densité peut être obtenue par pesée d'un échantillon d'aérogel de dimensions connues ou mesurées.

Il présente avantageusement une porosité ouverte élevée. La porosité ouverte correspond au volume des pores de la structure de l'aérogel qui communiquent avec la surface du matériau. Elle peut être évaluée par détermination de l'isotherme d'adsorption de l'azote ou analyse d'images obtenues notamment par tomographie X.

La porosité ouverte de la structure d'aérogel obtenu selon l'invention peut être plus particulièrement supérieure ou égale à 90 %, en particulier supérieure ou égale à 95 % et plus particulièrement comprise entre 96 et 99 %.

La structure poreuse du matériau obtenu peut être observée au microscope électronique à balayage.

Par ailleurs, l'aérogel formé selon l'invention présente avantageusement, sur l'ensemble de son volume, une conductivité électrique élevée. La conductivité électrique peut être appréciée par mesure de la résistance linéaire.

En particulier, l'aérogel peut présenter avantageusement une résistance linéaire (R_{L}), mesurée par la méthode deux pointes placées à 1 cm, notée R_{2P}^{1cm}, inférieure ou égale à 1000 Ω, en particulier inférieure ou égale à 100 Ω et plus particulièrement comprise entre 1 et 50 Ω.

La méthode de mesure de la résistance linéaire, dite méthode deux pointes, consiste à mesurer la résistance de l'aérogel placé entre deux points conducteurs (lignes d'eutectique conducteur indium-gallium) espacées de 1 cm.

De manière avantageuse, l'aérogel formé selon l'invention présente une bonne homogénéité et isotropie, à l'échelle du matériau aérogel, en termes de propriétés de conduction électrique et de densité.

L'aérogel obtenu selon l'invention présente par ailleurs de bonnes propriétés mécaniques, notamment en termes de flexibilité (souplesse). L'aérogel selon l'invention se présente avantageusement sous une forme autosupportée.

Il est possible de tirer profit des aérogels conducteurs électriques formés selon l'invention pour de multiples applications. Ainsi, ils peuvent être mis en œuvre en tant qu'électrodes, dans des supercondensateurs, mais aussi en tant que capteurs de pression ou encore, du fait de leurs fortes permittivités, en tant que capteurs piézorésistifs.

Bien entendu, l'invention n'est pas limitée aux applications spécifiques évoquées ci-dessus ; et d'autres applications des aérogels selon l'invention peuvent être envisagées. L'invention va maintenant être décrite au moyen des exemples suivants, donnés bien entendu à titre illustratif et non limitatif de l'invention.

### Exemple

Dans les exemples qui suivent, les nanofils d'argent (AgNW) sont préalablement préparés selon le mode opératoire décrit dans la publication [16] (Environ. Sci. : Nano, 2019, 6, 684) pour des nanofils de 10 µm de longueur moyenne et de 60 nm de diamètre moyen.

Les aérogels obtenus dans les exemples suivants sont caractérisés comme suit.

La densité est évaluée à partir des dimensions du matériau mesurées au pied à coulisse, et à la masse de l'aérogel, obtenue par pesée.

La conductivité électrique est évaluée par mesure de la résistance électrique linéaire, R_{2P}^{1cm}, par mesure de la résistance de l'aérogel posé entre deux lignes d'eutectique conducteur indium gallium espacées d'1 cm (méthode deux pointes). La valeur indiquée est la moyenne de trois mesures effectuées dans des directions différentes du matériau et à plusieurs hauteurs à l'extérieur et à cœur de l'aérogel.

Le matériau est observé au microscope électronique à balayage.

Les propriétés mécaniques sont testées macroscopiquement par compression manuelle.

### Exemple 1

### Aérogel de nanofils d'argent (comparatif)

Une dispersion de nanofils d'argent (à 2 % massique dans de l'eau déionisée) dans un moule (par exemple, moule en aluminium recouvert de PTFE) est congelée par immersion dans de l'azote liquide, puis insérée dans un lyophilisateur pendant au moins 24 heures pour sublimer les solvants.

Les caractéristiques de l'aérogel obtenu sont rassemblées dans le tableau 1 suivant.

**[Tableau 1]**

| Densité (g/cm³) | R_{2P}^{1cm} (Ω) |
|---|---|
| 0,035 | 0,7 |

L'aérogel obtenu présente une très bonne conduction électrique, ainsi qu'une très faible densité.

Toutefois, il présente une faible résistance mécanique, comme il ressort des photographies du test de compression représentées en figure 2.

### Exemple 2

### Aérogel de nanofils d'argent et de P(VDF-HFP) sans gélification (comparatif)

Une dispersion de nanofils d'argent (à 2 % massique) dans de l'isopropanol est ajoutée à une solution de P(VDF-HFP) (à 2 % massique) dans du DMSO à rapport isomassique, de telle sorte que la concentration finale en nanofils d'argent et en P(VDF-HFP) soit égale à 1 % massique.

La formulation obtenue, versée dans un moule (par exemple, moule en aluminium recouvert de PTFE), est ensuite congelée par immersion dans de l'azote liquide, puis insérée dans un lyophilisateur pendant au moins 24 heures pour sublimer les solvants.

Les caractéristiques de l'aérogel obtenu sont rassemblées dans le tableau 2 suivant.

**[Tableau 2]**

| Densité (g/cm³) | R_{2P}^{1cm} (Ω) |
|---|---|
| 0,018 | 0,3 |

L'aérogel obtenu présente une très bonne conduction électrique, ainsi qu'une très faible densité.

Toutefois, l'aérogel obtenu présente une mauvaise homogénéité, comme il ressort de la photographie de l'aérogel après découpe en figure 3.

Quelques soient les proportions en nanofils métalliques et en P(VDF-HFP), l'aérogel obtenu présente des bulles à cœur. Ainsi, les densités et les résistances linéaires mesurées sont faussées par le manque d'homogénéité du matériau. Ce procédé de préparation, ne mettant pas en œuvre d'étape préalable de gélification de la formulation selon l'invention, ne permet pas d'obtenir un aérogel satisfaisant.

### Exemple 3

### Aérogel de nanofils d'argent et de P(VDF-HFP) (3% massique et ratio AgNFs :PVDF de 0,5) avec gélification et séchage par lyophilisation

Dans un flacon est dissous du P(VDF-HFP) dans de l'acétone. Le mélange est chauffé et agité avec un barreau aimanté jusqu'à l'obtention d'une solution homogène (solution A).

Une dispersion de nanofils d'argent (AgNF) à 2 % massique dans de l'éthanol est préparée (suspension B). Puis la suspension B est ajoutée goutte à goutte à la solution A sous agitation. La formulation finale contient 1 % massique d'AgNF, 57 % massique d'éthanol, 2 % massique de P(VDF-HFP) et 40 % massique d'acétone. Le rapport massique AgNF/P(VDF-HFP) est ainsi de 0,5. La concentration totale en composants de l'aérogel final dans la formulation est de 3 % massique.

Le mélange résultant est agité jusqu'à homogénéisation, puis versé dans un moule avant d'être laissé gélifier pendant 2 heures à -20°C dans un congélateur.

Une fois un gel obtenu, ce dernier est plongé dans quatre bains successifs d'eau (deux fois 30 minutes, puis deux fois 24 heures), pour procéder à l'échange de solvant. Si le moule est suffisamment haut pour être rempli d'au moins 10 fois le volume de gel en solvant d'échange, à savoir l'eau, le moule peut être utilisé tel quel ; sinon, le moule est introduit dans un autre contenant. Il est préférable de ne pas démouler le gel pour éviter de le détériorer.

Enfin, le gel est congelé par contact avec une surface métallique refroidie à -20°C avant d'être lyophilisé pendant au moins 24 heures.

Les caractéristiques de l'aérogel obtenu sont rassemblées dans le tableau 3 suivant.

**[Tableau 3]**

| Densité (g/cm³) | R_{2P}^{1cm} (Ω) |
|---|---|
| 0,04 | 2,1 |

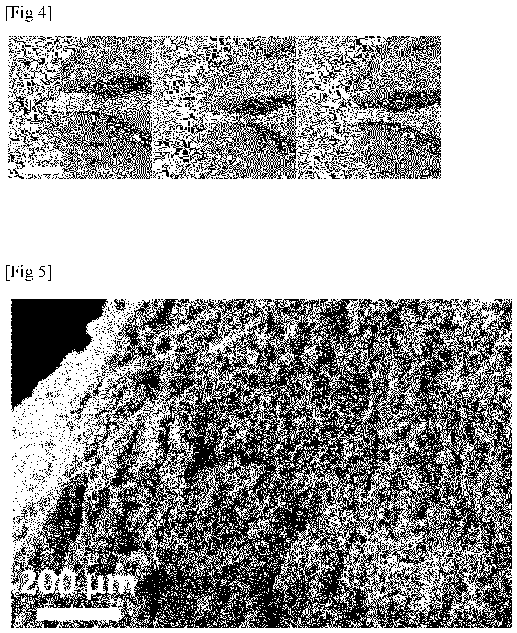

L'aérogel obtenu présente une très bonne conduction électrique, ainsi qu'une faible densité. Par ailleurs, l'aérogel synthétisé est homogène contrairement à l'exemple précédent, et présente de bonnes performances mécaniques, comme visualisé sur les photographies du test de compression manuelle présentées en figure 4. L'aérogel retrouve sa forme initiale après relâchement de la force de compression.

### Exemple 4

### Aérogel de nanofils d'argent et de P(VDF-HFP) (7,5% massique et ratio AgNFs :PVDF de 0,5) avec gélification et séchage par lyophilisation

Dans un flacon est dissous du P(VDF-HFP) dans de l'acétone. Le mélange est chauffé à 50°C et agité à 130 rpm jusqu'à l'obtention d'une solution homogène. Puis est ajoutée, goutte à goutte, une dispersion de nanofils d'argent dans de l'éthanol anhydre. La formulation finale contient 2,5 % massique d'AgNF, 35 % massique d'éthanol, 5 % massique de P(VDF-HFP) et 57,5 % massique d'acétone. Le rapport massique AgNF/P(VDF-HFP) est ainsi de 0,5. La concentration totale en composants de l'aérogel dans la formulation est de 7,5 % massique.

Le mélange résultant est agité jusqu'à homogénéisation, puis versé dans un moule avant d'être laissé gélifier pendant 2 heures à -20°C.

Une fois un gel obtenu, ce dernier est immergé dans des bains successifs d'eau pour procéder à l'échange de solvant permettant le séchage par lyophilisation.

Enfin, le gel est congelé par contact avec une surface à -20°C avant d'être séché au lyophilisateur.

Les caractéristiques de l'aérogel obtenu sont rassemblées dans le tableau 4 suivant.

**[Tableau 4]**

| Densité (g/cm³) | R_{2P}^{1cm} (Ω) |
|---|---|
| 0,10 | 1,5 |

L'aérogel obtenu présente une très bonne conduction électrique, ainsi qu'une faible densité. Un taux de charge totale plus important permet de diminuer favorablement la résistance électrique du matériau, pour le rendre très conducteur pour une densité faible de 100 mg/cm³. On observe néanmoins une augmentation de la densité avec le taux de charge total. Les propriétés mécaniques de l'aérogel sont conservées.

### Exemple 5

### Aérogel de nanofils d'argent et de P(VDF-HFP) (7 % massique et ratio AgNFs :PVDF de 0,4) avec gélification et séchage au CO₂ supercritique

Dans un flacon est dissous du P(VDF-HFP) dans de l'acétone. Le mélange est chauffé à 50°C et agité à 100 rpm jusqu'à l'obtention d'une solution homogène. Puis est ajoutée, goutte à goutte, une dispersion de nanofils d'argent à 5,7 % massique dans de l'éthanol anhydre de telle sorte que le rapport massique final AgNF/P(VDF-HFP) soit égal à 0,4. La formulation finale contient 2 % massique d'AgNF, 5 % massique de P(VDF-HFP), 35 % massique d'éthanol, et 58 % massique d'acétone. La concentration totale en composants de l'aérogel final dans la formulation est de 7 % massique.

Le mélange résultant est agité jusqu'à homogénéisation, puis versé dans un moule avant d'être laissé gélifier pendant 2 heures à -20°C.

Une fois un gel obtenu, ce dernier est séché au CO₂ supercritique.

Les caractéristiques de l'aérogel obtenu sont rassemblées dans le tableau 5 suivant.

**[Tableau 5]**

| Densité (g/cm³) | R_{2P}^{1cm} (Ω) |
|---|---|
| 0,05 | 1,3 |

Le séchage au CO₂ supercritique permet d'éviter l'étape d'échange de solvant et donc simplifie le procédé. Il limite une diminution des dimensions du matériau due à l'échange de solvant et/ou à la lyophilisation. Ainsi, la densité du matériau obtenu est abaissée pour des performances électriques équivalentes. Des matériaux conducteurs de quelques dizaines de mg/cm³ sont ainsi fabriqués.

Les propriétés mécaniques sont plus limitées comparativement à celles obtenues par séchage par lyophilisation.

### Exemple 6

### Aérogel de P(VDF-HFP) imprégné avec une solution de AgNFs (comparatif)

### Fabrication du matériau poreux

Le P(VDF-HFP) est dissous dans de l'acétone à raison de 3 % massique. De l'éthanol est ajouté goutte à goutte à cette première solution de telle sorte que la composition finale en pourcentage massique en polymères, acétone et éthanol est de 3 :40 :57. Cette solution est versée dans un moule, puis gélifiée à -20°C pendant 2 heures.

Une étape d'échange de solvant par bains successifs de tert-butanol est effectuée. Enfin, le gel est congelé sur les plateaux métalliques à -20°C avant d'être inséré dans un lyophilisateur pour 24 heures.

### Imprégnation du matériau poreux pour le rendre conducteur

L'aérogel obtenu est extrait de son moule puis immergé dans une solution dans laquelle sont dispersés 1 % massique de nanofils d'argent dans de l'isopropanol. L'aérogel ainsi recouvert de nanofils d'argent est congelé dans de l'azote liquide puis séché au lyophilisateur pendant 24 heures.

Le matériau obtenu est recouvert de nanofils d'argent au niveau de sa surface extérieure et est donc électriquement conducteur sur toute sa surface externe. La résistance électrique linéaire, R_{2P}^{1cm}, mesurée en surface, est de 0,1 Ω.

Les caractéristiques de l'aérogel obtenu sont rassemblées dans le tableau 6 suivant.

**[Tableau 6]**

| Densité (g/cm³) | R_{2P}^{1cm} en surface (Ω) | R_{2P}^{1cm} à cœur (Ω) |
|---|---|---|
| 0,04 | 0,1 | Pas de mesure faisable car isolant |

Malgré les hauts niveaux de conduction en surface, ce matériau ne présente pas de conduction à cœur. La modification de réponse électrique (modification de résistance ou de capacité) en déformation sera très faible et ne tirera pas profit de la surface développée totale du matériau poreux. Ce matériau ne présente pas d'intérêt pour le domaine d'applications visé.

### Références

[1] Techniques de l'ingénieur, Réf : N3801 V1 « Mousses métalliques ― Propriétés » ;
[2] Banhart et al., Adv. Eng. Mater., vol. 15, n° 3, p. 82-111, 2013;
[3] G. J. Davies et S. Zhen, J. Mater. Sci., vol. 18, n° 7, p. 1899-1911, 1983;
[4] F. Qian et al., Nano Lett., vol. 17, n° 12, p. 7171-7176, déc. 2017 ;
[5] Jung et al., Nano Lett., vol. 14, n° 4, p. 1810-1817, avr. 2014;
[6] S. M. Jung et al., Sci. Rep., vol. 2, n° 1, déc. 2012;
[7] T. M. Fears et al., APL Mater., vol. 6, n° 9, p. 091103, sept. 2018;
[8] L. Yang et al., Compos. Part Appl. Sci. Manuf., vol. 65, p. 125-134, oct. 2014;
[9] A. B. da Silva et al., Polymer, vol. 55, n° 1, p. 226-234, janv. 2014
[10] J.-W. Jung et al., ACS Energy Lett., vol. 2, n° 3, p. 673-680, mars 2017
[11] Y. Yu et al., Polymer, vol. 55, n° 22, p. 5616-5622, oct. 2014;
[12] M. Sarno et al., Nanotechnology, vol. 28, n° 20, p. 204001, avr. 2017;
[13] J. Huang et al., Chem. Eng. J., vol. 364, p. 28-36, mai 2019 ;
[14] P. Yan et al., Small, vol. 13, n° 38, p. 1701756, oct. 2017;
[15] Z. Zeng et al., ACS Appl. Mater. Interfaces, vol. 9, n° 37, p. 32211-32219, sept. 2017;
[16] Toybou et al., Environ. Sci. : Nano, 2019, 6, 684.

## Revendications

1. Procédé de préparation d'un aérogel électriquement conducteur, comprenant au moins les étapes suivantes :
(i) disposer d'une formulation obtenue par mélange
- d'une solution d'au moins un polymère fluoré dans un ou plusieurs solvants non aqueux S1, ledit polymère fluoré étant choisi parmi les polyfluorures de vinylidène, les copolymères à base de fluorure de vinylidène et leurs mélanges ; et
- d'une dispersion de nanoobjets métalliques présentant un facteur de forme supérieur ou égal à 2, en particulier étant des nanofils métalliques, dans un ou plusieurs solvants alcooliques S2 ;
(ii) porter la formulation de l'étape (i) dans des conditions propices à sa gélification ;
(iii) dans le cas d'un séchage en étape (iv) par lyophilisation, procéder à un échange du milieu solvant de la formulation gélifiée par un ou plusieurs solvants aptes à être éliminés par lyophilisation ; et
(iv) éliminer le milieu solvant de la formulation gélifiée obtenue à l'issue de l'étape (ii) ou, le cas échéant, à l'issue de l'étape (iii), par lyophilisation ou par séchage supercritique, en particulier par séchage au CO₂ supercritique, pour obtenir ledit aérogel.

2. Procédé selon la revendication précédente, dans lequel le ou lesdits polymères fluorés sont choisis parmi les polyfluorures de vinylidène (PVDF), les copolymères à base de fluorure de vinylidène choisis parmi les copolymères de fluorure de vinylidène et d'un ou plusieurs comonomères fluorés choisis parmi l'hexafluoropropylène (HFP), le chlorotrifluoroéthylène (CTFE), le tétrafluoroéthylène (TFE), le trifluoroéthylène (TrFE), le chlorofluroéthylène (CFE), le perfluorobutyléthylène (PFBE), le fluoroéthylènepropylène (FEP) le 1,2-difluoroéthylène, le tétrafluoroéthylène (TFE), le 3,3,3-trifluoropropène, le 2-trifluorométhyl- 3,3,3-trifluoro-1-propène, le 2,3,3,3-tetrafluoropropène (HFO-1234yf), le E-1,3,3,3-tetrafluoropropène (HFO-1234zeE), le Z-1,3,3,3-tetrafluoropropène (HFO-1234zeZ), le 1,1,2,3-tetrafluoropropène (HFO-1234yc), le 1,2,3,3- tetrafluoropropène (HFO-1234ye), le 1,1,3,3-tetrafluoropropène (HFO- 1234zc) et le chlorotétrafluoropropène (HCFO-1224) et les combinaisons de ceux-ci ; le ou lesdits polymères fluorés étant plus particulièrement choisis parmi les homopolymères polyfluorures de vinylidène, les copolymères poly(fluorure de vinylidene-co-trifluoroéthylène), poly(fluorure de vinylidene-co-hexafluoropropylène), poly(fluorure de vinylidene-co-fluoroéthylènepropylène) et leurs mélanges.

3. Procédé selon l'une quelconque des revendications précédentes, dans lequel le ou lesdits solvants S1 sont choisis parmi les solvants aprotiques, en particulier choisis parmi l'acétone, la diméthylformamide (DMF) et le diméthyl sulfoxyde (DMSO), en particulier l'acétone.

4. Procédé selon l'une quelconque des revendications précédentes, dans lequel lesdits nanoobjets métalliques présentent un facteur de forme supérieur ou égal à 10, notamment supérieur ou égal à 50 et plus particulièrement compris entre 100 et 40 000.

5. Procédé selon l'une quelconque des revendications précédentes, dans lequel lesdits nanoobjets métalliques sont des nanofils métalliques, en particulier présentant une longueur moyenne comprise entre 1 µm et 1000 µm et de préférence entre 2 µm et 500 µm et un diamètre moyen compris entre 20 nm et 500 nm et de préférence entre 30 nm et 100 nm, et notamment choisis parmi des nanofils à base d'argent, d'or, de cuivre, de nickel, de palladium et/ou de platine, en particulier des nanofils d'argent.

6. Procédé selon l'une quelconque des revendications précédentes, dans lequel le ou lesdits solvants alcooliques S2 sont choisis parmi les alcools en Ci à Cs, tels que l'éthanol, le méthanol, l'isopropanol et le tert-butanol, en particulier l'éthanol.

7. Procédé selon l'une quelconque des revendications précédentes, dans lequel le ou lesdits polymères fluorés sont présents en une teneur comprise entre 0,2 % et 40 % massique, en particulier entre 1 et 20 % et plus particulièrement entre 2 et 5 % massique, par rapport à la masse totale de ladite formulation en étape (i) ; et/ou les nanoobjets métalliques, en particulier les nanofils métalliques, sont présents en une teneur comprise entre 0,01 et 10 % massique, en particulier entre 0,5 et 5 % massique, par rapport à la masse totale de ladite formulation en étape (i).

8. Procédé selon l'une quelconque des revendications précédentes, dans lequel lesdits nanoobjets métalliques et le ou lesdits polymère(s) fluoré(s) sont mis en œuvre dans un rapport massique nanoobjets métalliques, en particulier nanofils métalliques/polymère(s) fluoré(s) compris entre 0,1 et 100, en particulier entre 0,3 et 5,0 et plus particulièrement entre 0,3 et 2.

9. Procédé selon l'une quelconque des revendications précédentes, dans lequel ladite formulation est gélifiée en étape (ii) dans un récipient ayant la forme et les dimensions souhaitées pour l'aérogel.

10. Procédé selon l'une quelconque des revendications précédentes, dans lequel la gélification en étape (ii) est opérée en abaissant la température de la formulation en-dessous d'une température limite dite température de gélification T_{gel}, en particulier à une température inférieure ou égale à -5 °C, notamment inférieure ou égale à -20°C, et plus particulièrement comprise entre -15 et -22°C.

11. Procédé selon l'une quelconque des revendications précédentes, dans lequel l'étape (iv) est opérée par lyophilisation, ledit procédé comprenant une étape (iii) d'échange du milieu solvant par un ou plusieurs solvants choisis parmi l'eau, les alcools, en particulier en C₃-C₅, et plus particulièrement en C₄-C₅, tel que le tert-butanol, et leurs mélanges ; l'étape (iii) étant plus particulièrement opérée par immersion, en particulier à plusieurs reprises, de ladite formulation gélifiée à l'issue de l'étape (ii) dans le ou lesdits solvants d'échange.

12. Procédé selon l'une quelconque des revendications précédentes, dans lequel l'élimination du milieu solvant en étape (iv) est opérée par lyophilisation, en particulier *via* les étapes successives suivantes :
- solidification du milieu solvant de la formulation gélifiée par abaissement de la température de ladite dispersion en-dessous du point de fusion dudit milieu solvant ; et
- sublimation sous vide dudit milieu solvant solidifié pour former un aérogel.

13. Procédé selon l'une quelconque des revendications 1 à 10, dans lequel l'élimination du milieu solvant en étape (iv) est opérée par séchage supercritique, en particulier au dioxyde de carbone supercritique.

14. Aérogel composite électriquement conducteur, en particulier tel qu'obtenu selon le procédé de l'une quelconque des revendications 1 à 13, ledit aérogel comprenant des nanoobjets métalliques présentant un facteur de forme supérieur ou égal à 2, en particulier tels que décrits dans la revendication 4 ou 5, dans une matrice polymérique à base d'un ou plusieurs polymère(s) fluoré(s) choisi(s) parmi les polyfluorures de vinylidène, les copolymères à base de fluorure de vinylidène et leurs mélanges, en particulier tels que décrits dans la revendication 2.

15. Aérogel selon la revendication 14, ledit aérogel présentant, sur l'ensemble de son volume, une densité inférieure ou égale à 500 mg/cm³, en particulier inférieure ou égale à 200 mg/cm³, notamment comprise entre 10 et 100 mg/cm³ et plus particulièrement comprise entre 20 et 70 mg/cm³.

16. Utilisation d'un aérogel tel que défini en revendication 14 ou 15, en particulier tel qu'obtenu selon le procédé de l'une quelconque des revendications 1 à 13, en tant qu'électrode, pour une batterie ou un supercondensateur, en tant que capteur de pression ou de matériau actif pour un capteur piézorésistif.
